# EUROPÄISCHE PATENTSCHRIFT

(11) **EP 4 003 629 B1**
(45) Veröffentlichungstag und Bekanntmachung des Hinweises auf die Patenterteilung: **06.11.2024**
(21) Anmeldenummer: 20740596.0
(22) Anmeldetag: 13.07.2020
(51) Int. Cl.: B23F 21/00, B23F 15/00, B23F 19/00, B23F 19/05, B23F 17/00, B23F 21/03, B23F 23/12, B23F 23/00, B23F 1/02, B23F 1/06, G05B 19/19, B23F 5/16, B23F 5/02, B23F 5/20

(54) **VERFAHREN ZUM HARTFEINBEARBEITEN ZWEIER VERZAHNUNGEN AN EINEM WERKSTÜCK, SOWIE VERZAHNUNGSMASCHINE, STEUERPROGRAMM, HARTFEINBEARBEITUNGSKOMBIWERKZEUGE UND VERWENDUNG EINER SENSORDANORDNUNG DAFÜR**
METHOD FOR HARD FINE MACHINING OF TWO TOOTHINGS ON A WORKPIECE, AND GEAR CUTTING MACHINE, CONTROL PROGRAM, HARD FINE MACHINING COMBINATION TOOLS AND USE OF A SENSOR ASSEMBLY THEREFOR
PROCÉDÉ D'USINAGE DE PRÉCISION SUR MÉTAUX DURCIS DE DEUX DENTURES D'UNE PIÈCE, MACHINE À TAILLER LES ENGRENAGES, PROGRAMME DE COMMANDE, OUTILS COMBINÉS D'USINAGE DE PRÉCISION SUR MÉTAUX DURCIS ET UTILISATION D'UN ENSEMBLE DE DÉTECTION APPROPRIÉ

(30) Priorität: 31.07.2019 DE 102019005405
(43) Veröffentlichungstag der Anmeldung: 01.06.2022
(73) Patentinhaber: Gleason Switzerland AG, 2557 Studen (CH)
(72) Erfinder: MINAS, Roman, 8308 Illnau (CH); HUNZIKER, Raphaël, 4852 Rothrist (CH); LANG, Severin, 3426 Aefligen (CH); BÜRKI, Marc, 4900 Langenthal (CH); RIEDERER, Silvan, 8408 Winterthur (CH)
(74) Vertreter: Leinweber & Zimmermann
(86) Internationale Anmeldenummer: PCT/EP2020/069772
(87) Internationale Veröffentlichungsnummer: WO 2021/018562

(56) Entgegenhaltungen:
- EP-A1- 3 241 640
- EP-A2- 2 803 436
- EP-A2- 2 823 924
- WO-A1-2019/011871
- DE-A1- 102009 059 331
- DE-A1- 3 314 793
- GB-A- 2 018 178
- US-A- 5 857 896
- US-A1- 2018 236 576
- US-B1- 6 577 917

## Beschreibung

Die Erfindung betrifft ein Verfahren zum Hartfeinbearbeiten zweier an einem Werkstück vorgesehener, voneinander verschiedener Verzahnungen, bei dem man vor der jeweiligen Bearbeitung zur Einstellung eines passenden Werkzeugeingriffs für die Bearbeitung eine erste relative Drehwinkellage einer ersten Drehlagenreferenz einer ersten der Verzahnungen zu einer Drehachsposition einer das Werkstück für die erste Bearbeitung aufgespannt haltenden Werkstückspindel sowie eine zweite relative Drehwinkellage einer zweiten Drehlagenreferenz der zweiten der Verzahnungen zu einer Drehachsposition einer das Werkstück für die zweite Bearbeitung aufgespannt haltenden Werkstückspindel bestimmt. Ein derartiges Verfahren gemäß dem Oberbegriff des Anspruchs 1 ist aus dem Dokument EP 2 823 924 A2 bekannt. Die Erfindung betrifft ferner eine Verzahnungsmaschine zum Hartfeinbearbeiten zweier an einem Werkstück vorgesehener, voneinander verschiedener Verzahnungen, ein Steuerprogramm mit Steueranweisungen zur Ausführung des Verfahrens, ein Hartfeinbearbeitungskombiwerkzeug und die Verwendung einer Sensoranordnung bei einer Einzentrieroperation bei einer Hartfeinbearbeitung von zwei unterschiedliche Verzahnungen aufweisenden Werkstücken.

Derartige Verfahren sind bekannt, etwa bei wellenartigen Werkstücken, die zwei oder mehr Verzahnungen tragen, es gibt jedoch auch "hantelförmige" Werkstücke, bei denen zwei Werkräder auch unterschiedlichen Durchmessers durch einen auch sehr kurzen Schaft miteinander verbunden sind. Für derartige Werkstücke stellt der Radkörper der einen Verzahnung gegenüber der anderen Verzahnung eine Schulter dar, so dass für Letztere das Verzahnungswälzschleifen als beliebtestes genaues und wirtschaftliches Verfahren nicht mehr einsetzbar ist. So werden derartige Verzahnungen hartfeinbearbeitet, indem die größere (größerer Durchmesser) Verzahnung durch Wälzschleifen hartfeinbearbeitet wird, wohingegen die kleinere Verzahnung z. B. mit einem innenverzahnten Honring gehont wird.

Für den jeweiligen Bearbeitungseingriff ist eine passende Drehlage von Werkzeug und Werkstück erforderlich, die üblicherweise einmal für ein erstes zu bearbeitendes Werkstück einer Werkstückcharge eingerichtet wird. Dazu führt man (Ersteinmitten) z. B. einen Werkzeugzahn in die Zahnlücke einer Werkstückverzahnung ein, sorgt durch Tangentialverschiebung oder Relativdrehung für einen Kontakt einmal mit der linken Zahnflanke und einmal mit der rechten Zahnflanke des Werkstücks, zeichnet die Drehlagen der Kontaktsituation auf und berechnet durch Mittelwertbildung die Mitte der Zahnlücke der Werkstückverzahnung als Beispiel für eine Drehlagenreferenz bzw. die relative Drehwinkellage dieser Drehlagenreferenz bezüglich einer vorgegebenen Drehachsposition der Werkstückspindel, und dies auch im kontinuierlichen Verfahren. Dies wird in der bekannten Technik, beispielsweise für das Wälzschleifen der einen Verzahnung, durchgeführt. Für weitere Verzahnungen der gleichen Werkstückcharge ist diese Ersteinmittoperation zum Einrichten des passenden Eingriffs nicht mehr erforderlich, es genügt, die nachfolgenden Werkstücke in die gleiche Drehlage zu bringen wie das erstbearbeitete Werkstück. Hierzu genügt es wiederum, die Lage der Zahnlückenmitten (erste Drehlagenreferenz) zu der vorgegebenen Drehachsposition der Werkstückspindel (Werkstückspindelreferenz) zu bringen. Die Positionen der Zahnlücken und Zahnlückenmitten selbst können z. B. durch einen berührungslos arbeitenden, etwa induktiven Sensor ermittelt werden.

Für die zweite, z. B. zu honende Verzahnung wird das Werkstück von der Werkstückspindel der Schleifmaschine ausgespannt und auf eine Werkstückspindel einer Honmaschine aufgespannt, und auch für diese Verzahnung findet das Einrichten (Ersteinmitten) für den Werkzeugeingriff statt sowie für die nachfolgenden Werkstücke eine Einzentrier- oder Einmittoperation im Sinne der Ermittlung der Zahnlückenmitten (zweite Drehlagenreferenz) zu der Werkstückspindelreferenz der Honmaschine.

All die bekannten Verfahren zur Bearbeitung von Werkstücken mit mehreren unterschiedlichen Verzahnungen haben ihre Vor- und Nachteile.

Der Erfindung liegt die Aufgabe zugrunde, ein derartiges Verfahren insbesondere im Hinblick auf hohe Genauigkeitsanforderungen weiter zu verbessern.

Diese Aufgabe wird von der Erfindung in verfahrenstechnischer Hinsicht durch eine Weiterbildung des Verfahrens der eingangs genannten Art gelöst, das im Wesentlichen dadurch gekennzeichnet ist, dass die Bearbeitungen ohne zwischenzeitlichen Aufspannungswechsel auf derselben Werkstückspindel und unter zugrundeliegender gekoppelter erster und zweiter Drehlagenreferenz erfolgen, wobei insbesondere die Bearbeitungsart der Hartfeinbearbeitung der ersten und zweiten Verzahnung die Gleiche ist und bevorzugt vom Bearbeitungseingriff her der eines Schraubradgetriebes ist. Die Drehachsen der beiden Verzahnungen stimmen überein und fallen mit der Werkstückspindelachse zusammen.

Bei der erfindungsgemäßen Weiterbildung bleibt aufgrund der beibehaltenen Aufspannung eine einmalig festgelegte und erkannte relative Drehlage des Werkstücks gegenüber der Werkstückspindelreferenz erhalten, was normalerweise unbeachtlich ist, da die Einmittoperation jeder einzelnen Verzahnung ohnehin erforderlich ist und es für den jeweiligen Bearbeitungseingriff mit dem Hartfeinbearbeitungswerkzeug keine Rolle spielt, mit welcher Zahnlücke der Werkstückverzahnung die Bearbeitung begonnen wird. Gemäß dem weiteren erfindungsgemäßen Konzept der zugrundeliegenden gekoppelten ersten und zweiten Drehlagenreferenz wird die diesbezügliche Symmetrie jedoch insoweit gebrochen, dass die Relativdrehlage der ersten Verzahnung gegenüber der zweiten Verzahnung von Bedeutung ist. Zieht man eine beliebige Zahnlücke der ersten Verzahnung heran, so soll z. B. die im Uhrzeigersinn nächstgelegene Zahnlücke der anderen Verzahnung einen vorgegebenen Drehwinkelabstand von dieser Zahnlücke der ersten Verzahnung haben (gemessen bezüglich der jeweiligen Zahnlückenmitte). Insoweit wird bevorzugt vorgesehen, dass die Kopplung in einer innerhalb einer Toleranz um einen vorgegebenen Drehwinkel liegenden Drehwinkeldifferenz zwischen erster und zweiter Drehlagenreferenz besteht.

Da die erste und zweite Verzahnung voneinander unterschiedlich sind, insbesondere in Modul, Schrägungswinkel, Zahnbreite und/oder Durchmesser der Verzahnung, ist eine solche Drehwinkeldifferenz davon abhängig, welche beiden z. B. in der Projektionsebene der Werkstückachse nebeneinanderliegenden (oder definiert voneinander beabstandeten) Zahnlücken herangezogen werden. Dazu wird bevorzugt die erste und zweite Drehlagenreferenz einem vorgegebenen Bezug, insbesondere ausgewählten Referenzzahn einer Verzahnung zugeordnet. In einer konkreten Ausgestaltung würde man beispielsweise einen Referenzzahn von erster oder zweiter Verzahnung auswählen, die im Uhrzeigersinn anschließende Zahnlücke dieser Verzahnung, d. h. ihre Zahnlückenmitte, als eine Drehlagenreferenz auswählen und, wieder in Projektion auf die Normalenebene der Werkstückdrehachse gesehen, nächstgelegene Zahnlücke (Zahnlückenmitte) der anderen Verzahnung auswählen. Es versteht sich, dass anstelle der Zahnlückenmitten auch Zahnmitten herangezogen werden könnten oder Kreuzkombinationen davon. Des Weiteren versteht es sich, dass die Zuordnung zu dem Referenzzahn über einen in definierter und nachvollziehbarer Weise über den Referenzzahn ermittelbaren anderen Zahn oder Zahnlücke gestaltet werden kann. Beispielsweise könnte die erste Drehlagenreferenz auch der siebte Zahn im Uhrzeigersinn nach dem Referenzzahn sein und die zweite Drehlagenreferenz die dritte Zahnlücke der anderen Verzahnung im Gegenuhrzeigersinn bezüglich des Referenzzahns sein.

Die Drehachsposition der Werkstückspindel, (üblicherweise und) beispielhaft gegeben durch einen Nulldurchgang bei einer Drehung der Werkstückspindel und erfasst durch einen Drehgeber an der Werkstückspindel, kann grundsätzlich frei gewählt sein, wichtig ist lediglich die relative Drehwinkellage zur Drehlagenreferenz an der jeweiligen Werkstückverzahnung. Zur Realisierung des Bezugs und dem Einhalten des gewünschten Drehwinkels für die Drehwinkeldifferenz zwischen erster und zweiter Drehlagenreferenz kommt es aufgrund der Differenzbildung auf die absolute Lage der Werkstückspindelreferenz nicht an, sondern nur auf deren Existenz. Das heißt, der Steuereinrichtung einer das Verfahren durchführenden Maschine ist bekannt, in welche Drehlage das Werkstück für den Bearbeitungseingriff zu verfahren ist und wo sich in dieser Drehlage der Bezug, etwa der ausgewählte Referenzzahn, befindet.

In einer besonders bevorzugten Verfahrensgestaltung wird dieser Bezug und demnach insbesondere die vorgegebene Auswahl des Referenzzahns durch eine insbesondere am Werkstück selbst angeordnete Markierung bestimmt. In einem denkbar einfachsten Fall könnte eine Markierung etwa drehwinkelmäßig in Zahnmitte eines Zahns einer Verzahnung vorgesehen sein, durch eine sensorisch erfassbare Markierung, d. h. im Falle optischer Sensoren irgendeines Zeichens, Aufdrucks etc. oder auch einer einfachen Bohrung beispielsweise im Radkörper der anderen größeren Verzahnung. Letzteres wird insbesondere als vorteilhaft angesehen, da diese durch einen berührungslos arbeitenden Sensor ähnlich wie die Einmittsensoren erfassbar ist.

Wie eingangs bereits erläutert, wird auch beim erfindungsgemäßen Verfahren bevorzugt, für ein erstes Werkstück die Drehlagen für den Bearbeitungseingriff mit den jeweiligen Werkzeugen zu definieren und hierzu die Drehlagenreferenzen der ersten und zweiten Verzahnung in ihrer Relativlage zur Werkstückspindelreferenz aufzuzeichnen, und zwar für die durch die oben erläuterte Bezugsbestimmung definierten Drehlagenreferenzen. Dieses Einrichten gemäß Anspruch 5 kann erneut vorgenommen werden, wenn die Werkzeuge ausgetauscht oder nachprofiliert wurden.

Für dann nachfolgende Werkstücke der gleichen Werkstückcharge ist dieses Einrichten nicht mehr erforderlich, vielmehr kann die passende Achsdrehlage für den Werkzeugeingriff anhand der für dieses Werkstück insbesondere mittels berührungslosen Sensoren bestimmten ersten bzw. zweiten relativen Drehwinkellage erfolgen.

In diesem Zusammenhang wird es bevorzugt, wenn dabei für das jeweilige Werkstück auch der vorgegebene Bezug, insbesondere der ausgewählte Referenzzahn, identifiziert und hierzu insbesondere die Drehlage der Markierung insbesondere berührungslos sensorisch erfasst wird. Damit weiß die Steuerung nicht nur, wo sich für die erste und zweite Verzahnung die Zahnlücken befinden, sondern auch wo sich diejenigen z. B. Zahnlücken der ersten und zweiten Verzahnung befinden, zu deren Bezug die Vorgabe für die einzuhaltende Drehwinkeldifferenz der beiden Drehlagenreferenzen gilt.

In einer besonders bevorzugten Ausgestaltung wird die Bestimmung der zweiten Drehlagenreferenz/zweiten relativen Drehwinkellage vorgenommen, bevor die Bearbeitung der ersten Verzahnung aufgenommen wird, und vice versa. Auch die Identifizierung des Bezugs/Referenzzahns wird bevorzugt vorgenommen, bevor mit der Bearbeitung einer der Verzahnungen begonnen wird. Dadurch verfügt die Maschinensteuerung über Informationen, die in die Einstellung der passenden Drehlagen für den Bearbeitungseingriff einfließen können. Denn für die jeweiligen Einzelbearbeitungen bestehen Toleranzfelder, innerhalb derer die Steuerung die finale Drehlage der Werkstückspindel für die Bearbeitung auswählen kann.

Üblicherweise würde ein Steuerungsalgorithmus darauf hinwirken, sich lagemäßig genau in die Mitte der Toleranz zu setzen, wodurch insbesondere der Abtrag von Links- und Rechtsflanken symmetrisiert wird und demnach eine gleichmäßige Werkzeugabnutzung erreicht wird. In einer bevorzugten Verfahrensgestaltung wird jedoch als Zwangsbedingung eingekoppelt, dass die Drehwinkeldifferenz zwischen erster und zweiter Drehlagenreferenz innerhalb der Toleranz mit der Vorgabe übereinstimmt und unter Berücksichtigung dieser Zwangsbedingung die Drehlagen für die einzelnen Bearbeitungen in deren Einzeltoleranzfeldern bestimmt, bevorzugt nach Maßgabe einer Symmetrisierung der Position im Toleranzfeld für beide Bearbeitungen.

Als vereinfachendes Beispiel haben beide Einzeltoleranzfelder erlaubte Werte (lediglich beispielhafte Zahlenwerte) zwischen +5 µm und -5 µm (am Teilkreis), und im Idealfall wäre jeweils bei der 0 µm auch die richtige Drehwinkeldifferenz eingestellt, aufgrund unterschiedlicher Härteverzüge wäre bei festgehaltener 0 µm bezüglich der einen Verzahnung für die andere jedoch der Wert +2 µm auszuwählen, würde die Steuerung ausgleichend symmetrisieren, und statt der 0 µm die -1 µm und statt der +2 µm die +1 µm auswählen, unter Einhaltung der Zwangsbedingung. Auf diese Weise gelingt es auch bei sensiblen Toleranzen für die Drehwinkeldifferenz von nur wenigen Winkelminuten, z. B. ±5 Winkelminuten oder geringer, bevorzugt ±2 Winkelminuten oder geringer, weiter bevorzugt ±1 Winkelminute oder geringer, wobei auch ±40 Winkelsekunden oder weniger, insbesondere ±25 Winkelsekunden oder weniger, sogar ±15 Winkelsekunden oder weniger, erreichbar sind, die dieses Kriterium nicht mehr erreichende Ausschussmenge zu minimieren, da über die Kopplung beide Toleranzfelder der einzelnen Bearbeitungen ausgenutzt werden können und bekannt sind, bevor durch andernfalls bereits vollzogene Bearbeitung der einen Verzahnung die Möglichkeit der gegenseitigen Abstimmung nicht mehr besteht.

In einer bevorzugten Ausgestaltung sind die Hartfeinbearbeitungswerkzeuge nachschärfbar/abrichtbar gestaltet, und es sind Abrichtwerkzeuge hierfür vorgesehen, insbesondere in Form von Verzahnungen, insbesondere Diamantabrichträdern, in relativ zueinander feststehender Drehlagenkopplung und insbesondere ebenfalls auf derselben Werkstückspindel angeordnet wie die erste und zweite Verzahnung. Durch die Drehlagenkopplung der Abrichtwerkzeuge bleibt auch nach einem Abrichten beispielsweise zweier innenverzahnter Honringe die relative Lage ihrer Zähne erhalten. Es könnten anstelle von Diamantabrichträdern auch dünne verzahnte Abrichträder herangezogen werden, deren Eingriff durch zusätzliche Maschinenachsbewegungen gesteuert wird.

In vorrichtungstechnischer Sicht stellt die Erfindung eine Verzahnungsmaschine gemäß Anspruch 8 zum Hartfeinbearbeiten derartiger Werkstücke unter Schutz, mit den erforderlichen Werkstück- und Werkzeugaufnahmen, Drehachsen und Positionierachsen sowie einer Steuereinrichtung mit Steueranweisungen zur Ausführung eines Verfahrens nach einem der o. g. Aspekte.

Eine solche Verzahnungsmaschine weist bevorzugt zwei, insbesondere drei Sensoren auf, je einen für die Zahnlückenbestimmung der jeweiligen Verzahnungen und insbesondere noch der Dritte zur Lageerfassung der Markierung. Eine derartige Sensoranordnung mit drei Sensoren wird auch eigenständig unter Schutz gestellt.

Zudem kann die Verzahnungsmaschine auch mit den Nachschärf- oder Profiliervorrichtungen für die Hartfeinbearbeitungswerkzeuge ausgestattet sein.

Auch stellt die Erfindung unter Schutz gemäß Anspruch 11 ein Hartfeinbearbeitungskombiwerkzeug, das zur Ausführung eines solchen Verfahrens geeignet ist, mit geometrisch unbestimmter Schneide in Form zweier innenverzahnter gekoppelter Honringe.

Die Erfindung stellt unter Schutz auch eine Verwendung gemäß Anspruch 12 einer Sensoranordnung bei einer Einzentrieroperation bei einer Hartfeinbearbeitung von zwei unterschiedliche Verzahnungen aufweisenden Werkstücken.

Mit Verfahren der o. g. Aspekte können insbesondere für Planetenradanwendungen, etwa in e-Drive-Getrieben, heranziehbare Werkstücke abgestufter winkelsynchroner Verzahnungen in zufriedenstellender Präzision hartfeinbearbeitet werden.

Weitere Merkmale, Einzelheiten und Vorteile der Erfindung ergeben sich aus der nachfolgenden Beschreibung mit Bezug auf die beigefügten Figuren, von denen
- Fig. 1: eine Perspektivansicht eines Werkstücks mit zwei Verzahnungen zeigt,
- Fig. 2: eine schematische Darstellung von Drehlagenreferenzen in einer Projektionsebene zeigt, auf der die Werkstückachse senkrecht steht,
- Fig. 3: den Aufbau einer Honmaschine mit zwei innenverzahnten Honringen zeigt,
- Fig. 4: eine schematische Darstellung zeigt, in der neben den Honringen und den Werkstückverzahnungen auch noch Sensorik und Abrichtwerkzeuge dargestellt sind,
- Fig. 5: eine Hartschälmaschine zeigt, und
- Fig. 6: ein Hartfeinbearbeitungswerkzeug mit zwei Hartschälrädern zeigt.

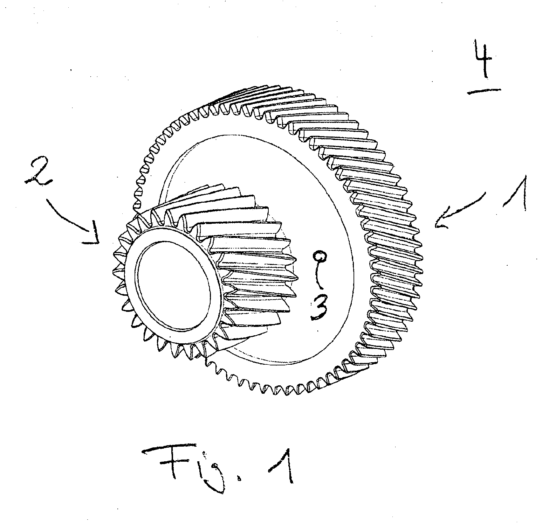

In Fig. 1 ist ein Werkstück 4 in einer perspektivischen Ansicht dargestellt. Das Werkstück 4 ist mit zwei Verzahnungen vorverzahnt, einer größeren (größerer Durchmesser) Verzahnung 1 und einer kleineren (mit kleinerem Durchmesser) Verzahnung 2, die über einen Schaft miteinander verbunden sind und deren Drehachsen koaxial verlaufen. Die beiden Verzahnungen bilden auch die beiden axialen Enden des Werkstücks 4. Das Werkstück 4 wird zur Hartfeinbearbeitung auf eine Werkstückspindel aufgespannt, deren Werkstückspindelachse koaxial zu den Verzahnungsdrehachsen verläuft. Die Verzahnung 1 könnte beispielsweise durch Wälzfräsen erzeugt sein und die Verzahnung 2 durch Wälzstoßen oder Wälzschälen, es könnten jedoch auch andere Kombinationen zum Einsatz gekommen sein, die Erfindung setzt erst mit der Hartfeinbearbeitung an.

Das heißt, die Verzahnungen 1 und 2 weisen gegenüber ihrer Zahnflankenendgeometrie noch ein Bearbeitungsaufmaß auf, das bei der Erzeugung der Verzahnung 1, 2 belassen wurde, zudem können beim Härten Härteverzüge und dadurch leicht geänderte Zahnformen entstanden sein. Mit der Hartfeinbearbeitung soll nun das verbleibende Bearbeitungsaufmaß nebst Härteverzügen abgetragen werden, um den Verzahnungen 1, 2 ihre Endgeometrie zu verleihen.

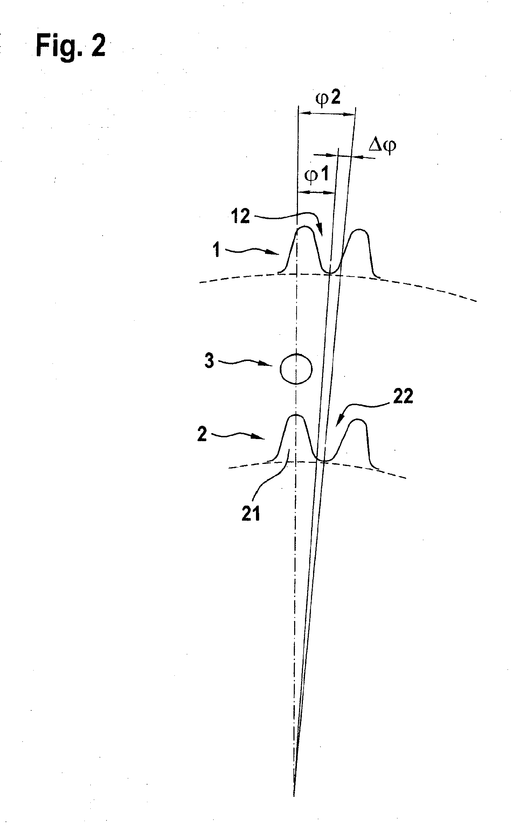

Ebenfalls in Fig. 1 sichtbar ist eine Bohrung 3 im Radkörper der Verzahnung 1 gebildet. Wie besser aus Fig. 2 zu erkennen ist, dient die Bohrung 3 als Markierung zur Identifizierung eines Zahns 21 der Verzahnung 2, nämlich z. B. eines Zahns 21, dessen Drehlage mit der der Markierung 3 im Wesentlichen übereinstimmt. Die Genauigkeit der Übereinstimmung ist nicht von Bedeutung, genauso könnte ein Winkelversatz vorgesehen sein und als durch die Markierung 3 identifizierter Zahn 21 der im Gegenuhrzeigersinn oder Uhrzeigersinn nächste Zahn der Verzahnung 2 markiert sein. Ebenfalls könnte man mit der Markierung 3 auch eine Zahnlücke 22 markieren oder einen Zahn, z. B. Zahn 12 der Verzahnung 1, oder eine Zahnlücke der größeren Verzahnung 1.

Bezüglich Markierung 3, hier der Verzahnungsmitte des Zahns 21 der Verzahnung 2 und der Zahnlückenmitte der nächsten Zahnlücke 22, liegt ein Drehwinkel ϕ2, der hier aufgrund des Moduls der Verzahnung 2 festgelegt ist, es könnte bei anderer Lage der Markierung jedoch ein nicht vorab bekannter Winkelwert sein. Zwischen der durch die Markierung 3 (bzw. deren Zentrum) festgelegten Drehlage und der im Uhrzeigersinn nächsten Zahnlücke 12 der Verzahnung 1 gibt es einen Winkel ϕ1, und eine Relativdrehlage der Verzahnung 1 gegenüber der Verzahnung 2 wird durch die Drehwinkeldifferenz Δϕ = ϕ2 - ϕ1 zwischen den beiden Zahnlückenmitten 22 und 12 bezogen auf die durch die Markierung 3 festgelegte Referenz definiert. Diese Winkeldifferenz Δϕ soll für das Werkstück 4 innerhalb einer sehr geringen Toleranz ±δΔϕ von nur 5 Winkelminuten oder weniger, bevorzugt 1 Winkelminute oder weniger, insbesondere 25 Winkelsekunden oder weniger, einer vorgegebenen Winkeldifferenz Δϕ₀ entsprechen.

Für das Folgende wird davon ausgegangen, dass nicht nur ein Werkstück 4 vom in Fig. 1 gezeigten Typ hartfein zu bearbeiten ist, sondern eine größere Werkstückcharge dieser Werkstücke 4 vorliegt, die zwar den gleichen Herstellungsweg hinsichtlich der Erzeugung der Verzahnungen 1, 2 und des Härtens durchlaufen hat, jedoch herstellungsbedingt geringfügig unterschiedliche Bearbeitungsaufmaßverteilungen aufweisen kann bzw. unterschiedliche Härteverzüge aufweisen kann.

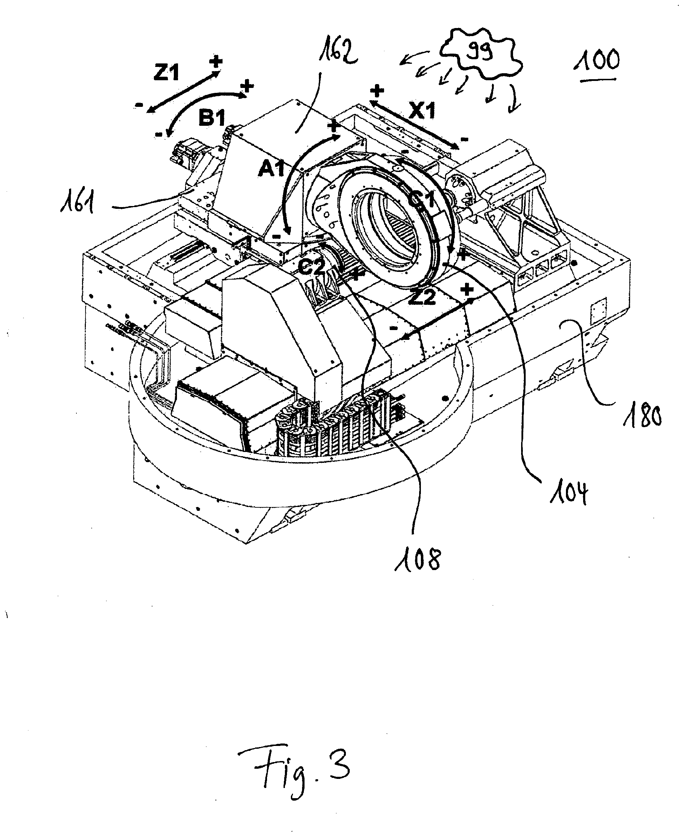

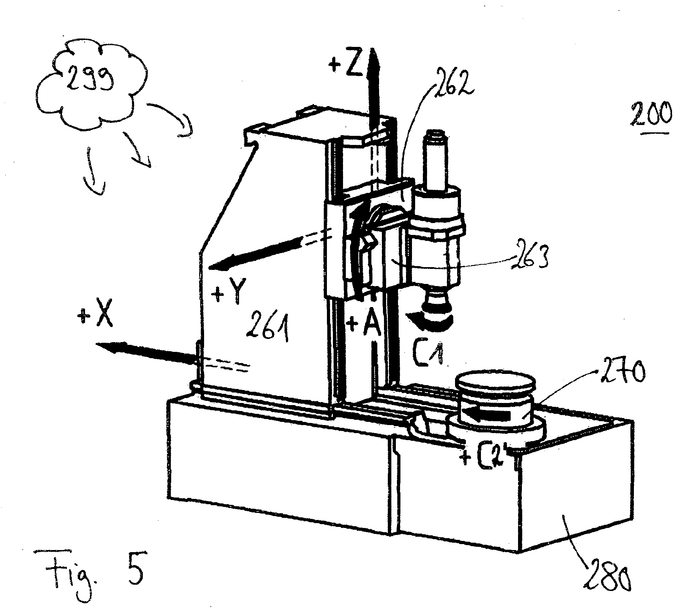

Die Werkstücke 4 einer Werkstückcharge werden zur Hartfeinbearbeitung auf eine Werkstückspindel (mit Werkstückspindeldrehachse C2 in der Ausführungsform von Fig. 3) aufgespannt, und die Hartfeinbearbeitung der Verzahnung 1 und der Verzahnung 2 erfolgt ohne zwischenzeitlichen Aufspannungswechsel, d. h. in der gleichen Aufspannung auf der gleichen Werkstückspindel. Des Weiteren erfolgt die Hartfeinbearbeitung der Verzahnung 1 und der Verzahnung 2 mit der gleichen Hartfeinbearbeitungsmethode, die im Beispiel von Fig. 3 das Verzahnungshonen (Schabschleifen) mit innenverzahnten Honringen ist oder in dem Ausführungsbeispiel 2 (Fig. 5) das Hartschälen mit außenverzahnten Hartschälrädern ist. Bevorzugt erfolgt die Hartfeinbearbeitung demnach im Bearbeitungseingriff eines Schraubradgetriebes mit unter einem Achskreuzwinkel stehenden Drehachsen der bearbeiteten Verzahnung und des bearbeitenden Werkzeugs. Werkzeugseitig sollen die relativen Drehlagen der beiden unterschiedlichen Verzahnungswerkzeuge (aufgrund der unterschiedlichen Verzahnungen 1, 2) ebenfalls drehfest miteinander gekoppelt sein, man kann hier von einem Tandemwerkzeug sprechen. Die Werkstückspindelreferenz ist dann eine vorgegebene Achsposition der C2-Achse.

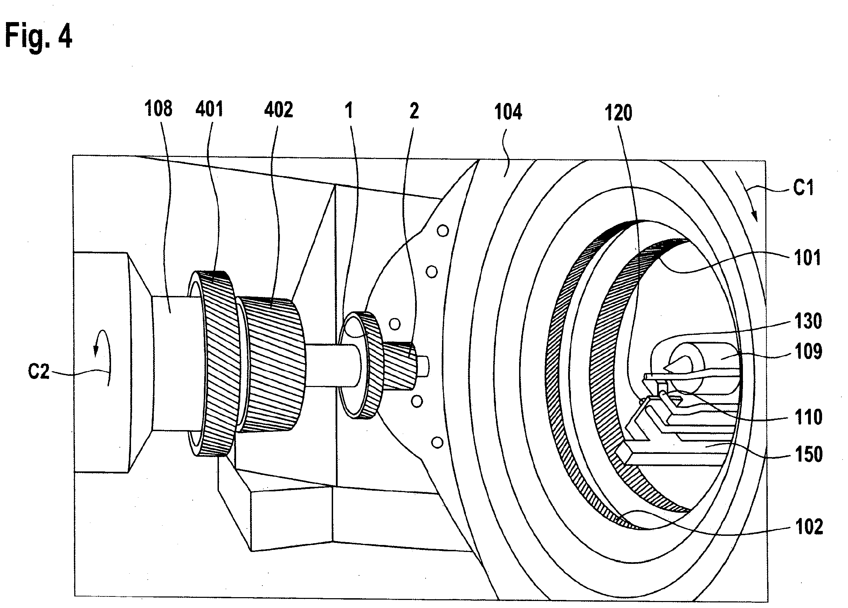

Die weiteren Erläuterungen orientieren sich an der Ausführungsform gemäß Fig. 3 und 4, bei der die Verzahnungen 1 und 2 mittels zweier innenverzahnter Honringe 101, 102 gehont werden, die fest in einem Honkopf 104 eingespannt sind.

Eine ausführlichere Erläuterung der in Fig. 3 dargestellten Verzahnungshonmaschine 100 wird unterlassen, da derartige Gestaltungen dem Fachmann bereits bekannt sind. Es versteht sich, dass die Verzahnungshonmaschine ein Maschinenbett 180 und die erforderlichen Schlitten und Maschinenachsen aufweist, um ein Verzahnungshonen mit innenverzahnten Honringen durchführen zu können. Bei der in Fig. 3 gezeigten Ausgestaltung wird die Drehachse C1 der Honringe 101 und 102 durch eine Schwenkachse A1 gegenüber der hinsichtlich ihrer Axiallage raumfesten Werkstückspindelachse C2 auf einen Achskreuzwinkel einstellbar, die Maschine verfügt zudem über einen weiteren Schwenkwinkel B1 mit gegenüber der Schwenkachse A1 linear unabhängigen Schwenkachse, die bevorzugt senkrecht auf der Schwenkachse A1 und der Axialrichtung der Werkstückachse C2 liegt. Diese ist wiederum parallel zu einer linearen Verfahrachse Z2 der Werkstückspindel. Der Honkopf 104 ist an einem werkzeugseitigen Kreuzschlitten 161, 162 angebracht, der werkstückachsparallel (Z1-Achse) und radial zur Werkstückachse Z2 (durch Linearachse X1) verschieblich ist. Die B1-Achse, üblicherweise für Flankenlinienmodifikationen bzw. deren Beeinflussung einsetzbar, kann hier als weitere Bewegungsachse eingesetzt werden, um eine bezüglich des Achskreuzpunkts außermittige Bearbeitung zu berücksichtigen. Alternativ ließe sich eine zusätzliche Linearachse Y1, z. B. orthogonal zu X1 und Z1, vorsehen.

Die Werkstückdrehachse C2 verfügt wie üblich über einen Antrieb und einen Drehgeber, mittels dessen eine Drehlage der Werkstückspindel (Drehachsenreferenz) gegenüber einer vorgegebenen Referenzlage, etwa einen internen Nulldurchgang der Werkstückspindel, bekannt ist. Auch die Werkzeugspindel C1 verfügt über einen solchen Drehgeber.

Wird ein neues Werkstück auf die Werkstückspindel aufgespannt, um die Hartfeinbearbeitung zu erfahren, ist nach dem Aufspannen in der Regel die Lage der Zahnlücken, beispielsweise der Verzahnung 2 gegenüber der Werkstückspindelreferenz, unbekannt. Mittels eines bevorzugt berührungslos arbeitenden Sensors (Indexsensors), etwa eines induktiven Sensors, können durch Vorbeiführen der Verzahnung 2 über einige Zahnlücken hinweg am Sensor 120 vorbei die Positionen der Zahnlücken gegenüber der Referenz der Werkstückspindel bestimmt werden. Wenn, über ein erstmaliges Einrichten des Bearbeitungseingriffs des Honrings 102 mit der Verzahnung 2, die gegenseitige Winkellage von Werkstückspindelachse und Werkzeugdrehachse festgelegt ist (übliche Ersteinzentrieroperation, beispielsweise durch Eintauchen des Werkzeugs in eine Zahnlücke, Verdrehung bis zur Zahnflanke links und Zahnflanke rechts der Lücke unter Festhalten der Drehlagen bei Kontakt und Berechnung durch Mittelwertbildung der Zahnlückenmitte), weiß die Maschinensteuerung 99 der Verzahnungsmaschine 100, auf welche Drehposition die Werkstückspindel gegenüber der eigenen Referenz zu verfahren ist, um für den Bearbeitungseingriff in der richtigen Drehlage zu sein. Diese Verfahren sind für Einzelverzahnungen per se bereits gut bekannt und können gleichermaßen für die Verzahnung 1 (und deren Bearbeitungseingriff mit Honring 101) ausgeführt werden.

Bei derartigen Bearbeitungen einzelner Räder spielt es normalerweise jedoch keine Rolle, welche Zahnlücke in die Bearbeitungsposition gefahren wird. Im vorliegenden Fall soll jedoch die Relativdrehlage der Verzahnung 1 gegenüber der Verzahnung 2, ausgedrückt durch die Drehwinkeldifferenz Δϕ, bei durch die Markierung 3 vorgegebenem Bezug in sehr strengen Toleranzen eingehalten werden. Hierzu ist in diesem Ausführungsbeispiel ein dritter Sensor, beispielsweise ebenfalls ein berührungsloser induktiver Sensor, vorgesehen, der die Drehlage der Markierung 3 erfasst, um somit die Grundlage für den Bezug für die Drehwinkeldifferenz Δϕ zu legen. In diesen Ausgestaltungen sind demnach drei berührungslose Sensoren 120, 130, 110 vorgesehen, die die Drehlagen der Zahnlücken der Verzahnung 2, der Markierung 3 und der Zahnlücken der Verzahnung 1 bestimmen. Die Sensoren 110, 120, 130 können über einen gemeinsamen Tragarm 150 fest positioniert sein (wie dargestellt) oder über Schlitten/bewegliche Arme beweglich angeordnet sein, oder auch Kombinationen davon. Auch der Tragarm 150 könnte zurückziehbar sein.

Da die Honringe 101 und 102 nicht gegeneinander verdrehbar sind, wie auch die Verzahnung 1 gegenüber der Verzahnung 2 nicht gegeneinander verdrehbar ist, sind alle Informationen vorhanden, um für die Bearbeitung der Verzahnung 1 durch das Honrad 1 innerhalb der für die Einzelbearbeitung vorgegebenen Einzeltoleranz zu arbeiten, also die Drehlage der Zahnlückenmitten gegenüber der Werkstückspindelreferenz im Vergleich zu der des "Masterrads" des Einrichtens für die Bearbeitungsdrehlage innerhalb der Einzeltoleranzen zum Masterrad zu belassen und auf diese Weise sicherzustellen, dass auf jeden Fall genügend abtragbares Aufmaß gegenüber der Zahnflankenendgeometrie vorhanden ist (man sich also hinsichtlich der Fertigungstoleranzen der Verzahnung 1 selbst bewegt). Gleiches ist für das Zahnrad 2 auszuführen und beide Einstellungen bevorzugt vorab so aufeinander abzustimmen, dass die Drehlagendifferenz Δϕ innerhalb der vorgegebenen Toleranz δΔϕ liegt.

Die Auswirkungen werden im Folgenden anhand eines zu Erläuterungszwecken stark vereinfachten Beispiels diskutiert. Es versteht sich, dass die Einstellungen für das "Masterrad", d. h. ein erst zu bearbeitendes Werkstück der Werkstückcharge bzw. des ersten Werkstücks der wiederaufgenommenen Bearbeitung, nach einer Nachprofilierung der Honringe 101, 102 auf passende Eingriffsdrehlagen unter Einhaltung der Winkeldifferenz Δϕ eingerichtet sind. Nimmt man übertriebenerweise an, dass beim Härten der Verzahnung 2 ein Verzug mit Tendenz zu einer Verschiebung der Zahnlückenmitten im Uhrzeigersinn aufgetreten ist und für die Verzahnung 1 im Gegenuhrzeigersinn, so würde die Steuerung durch Vergleich der relativen Drehlagen der ersten Drehlagenreferenz von Verzahnung 1 zur Referenz der Werkstückspindel gegenüber der des Masterrads für die Bestimmung der passenden Drehlageneinstellung für die Bearbeitung gegenüber der des Masterrads nachkorrigieren, um idealerweise in der Mitte des Toleranzfeldes für die Verzahnung 1 zu liegen, und dabei z. B. um -|δϕ1| zu verschieben, und bei gleichartiger Vorgehensweise für die Verzahnung 2 um +|δϕ2| verschieben. Dann ergäbe sich aber für dieses Werkstück eine Drehwinkeldifferenz von Verzahnung 2 zu Verzahnung 1 von Δcp* = cp2 + |δϕ2| - (ϕ1 - |δϕ1|) = Δϕ + (|δcp1| + |δϕ2|), und für den Fall |δϕ2| + |δϕ1| > δΔϕ würde man auf diese Weise zu einem nicht mehr den Anforderungen entsprechenden Werkstück gelangen.

Durch die Kopplung der Drehlagenreferenzen von Verzahnung 1 und Verzahnung 2 (mit Bezug auf die durch die Markierung 3 oder anderweitig identifizierte Konstellation) wird sichergestellt, dass Δϕ* (sofern theoretisch noch möglich) immer innerhalb der Toleranz von Δϕ₀ liegt und man zudem noch in der jeweiligen Einzeltoleranz, aber nicht mehr in der optimalen Mitte des Toleranzfeldes der Einzeltoleranzen der Einzelverzahnungen 1, 2 liegende Einzelbearbeitungen der Verzahnungen 1, 2 liegt.

Bei herkömmlicher Bereitstellung derartiger Werkstücke 4 mit Bearbeitung einer ersten Verzahnung durch Schleifen und, nach Aufspannungswechsel, der anderen Verzahnung durch z. B. Honen oder in der Reihenfolge vice versa ist eine Hartfeinbearbeitung bereits erfolgt und gibt, abgesehen von der nicht realisierten gleichen Werkstückaufspannung, auch hinsichtlich des Toleranzfeldes keinen Spielraum mehr, der zur Sicherstellung der innerhalb der Toleranz liegenden Drehlagendifferenz Δϕ ausgenutzt werden könnte.

In der schematischen Darstellung von Fig. 4 sind nochmals die drehlagengekoppelten Honräder 101 und 102 im Honkopf 104 dargestellt sowie die Sensoren 110, 120 und 130. Auch sind eine Reitstockspitze 109 sowie Diamantabrichträder 401, 402 auf der Werkstückspindel 108 zum Abrichten der Honringe 101, 102 vorgesehen.

Es versteht sich, dass die Art der Markierung 3 als Bohrung im Scheibenkörper der Verzahnung 1 sowie die sensorische Erfassung von deren Drehlage nur eine von mehreren Möglichkeiten ist, den Bezug für die Applikation der vorgegebenen Drehwinkeldifferenz Δϕ zu bestimmen (betrachtet man die Drehwinkeldifferenz zwischen zwei in Projektionsebene benachbarten Zahnlücken der Verzahnung 1 und 2 an irgendeiner beliebigen anderen Stelle, wird diese ja aufgrund der unterschiedlichen Verzahnungen von Δϕ₀ im Regelfall deutlich abweichen, daher ist die Bezugsbestimmung an sich günstig).

Beispielsweise könnte auch daran gedacht werden, durch die oben beschriebene Erfassung der Drehlagen der Zahnlücken von Verzahnung 1 zur Referenz der Werkstückspindel und der Zahnlücken der Verzahnung 2 zur Referenz der Werkstückspindel eine charakteristische Paarung zweier Zähne oder Zahnlücken von Verzahnung 1 und Verzahnung 2 zu identifizieren, die nur einmalig auftritt, und für diese charakteristische Paarung die Winkellagendifferenz Δϕ' zu bestimmen und als Zwangsbedingung für die Einstellung der Drehlagen für den jeweiligen Bearbeitungseingriff einzuführen.

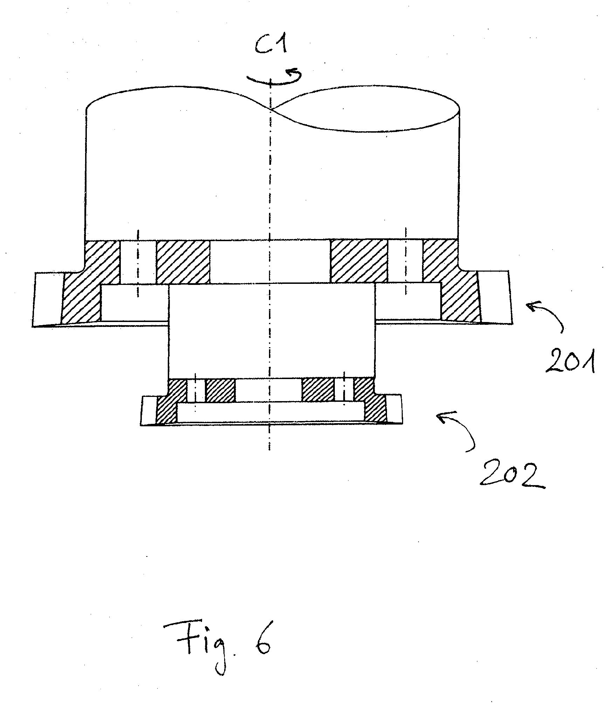

In den Fig. 5 und 6 ist noch eine zweite Ausführungsform dargestellt. Die in Fig. 5 gezeigte Hartschälmaschine 200 weist ein Maschinenbett 280 auf, an dessen einer Seite ein Werkstücktisch mit Werkstückspindel 270 angeordnet ist. Letzterer kann über eine Adapteraufspannung (nicht dargestellt) zur Aufnahme des in Fig. 1 dargestellten Werkstücks 4 ausgerüstet sein. Nicht dargestellt ist eine Reitstockanordnung zur Gegenlagerung (ähnlich wie Reitstockspitze 109 aus Fig. 4).

Werkzeugseitig ist ein entlang einer Radialrichtung X verschieblicher Hauptständer 261 vorgesehen, an dem ein Vertikalschlitten 262 in werkstückachsparalleler Z-Richtung verfahrbar ist, der drehbar mit Drehachse A zur Einstellung eines Achskreuzwinkels einen Tangentialschlitten 263 (Y-Richtung in der gezeigten Drehstellung A) trägt. Der Hartschälkopf ist am Tangentialschlitten 263 befestigt. In Fig. 5 ist die Maschine mit nur einem Einfachwerkzeug mit Hartschälrad dargestellt, bevorzugt kommt jedoch das in Fig. 6 gezeigte Tandemwerkzeug zum Einsatz. Gesteuert wird die Maschine 200 sowie deren Maschinenachsbewegungen von einer Steuerung 299.

Hier wird die Hartfeinbearbeitung auf einer Hartschälmaschine ausgeführt, mit der Struktur des in Fig. 6 nur grob schematisch gezeigten Kombiwerkzeugs bestehend aus zwei Hartschälrädern 201 und 202 zum Hartschälen der Verzahnungen 1 und 2. Die Funktionsweise der Drehlagenbestimmung ist wie anhand des ersten Ausführungsbeispiels beschrieben, die Art der Hartfeinbearbeitung ändert sich jedoch durch Bearbeitung mit geometrisch bestimmter Schneide. Auch hier sind die beiden Hartschälräder 201, 202 drehlagengekoppelt, und es herrschen somit für alle Werkstücke 4 der Charge die werkzeugseitig gleichen relativen Drehlageneinstellungen der beiden Hartschälräder. Auch hier sind, wenn auch nicht dargestellt, bevorzugt drei Sensoren, etwa über eine Tragekonstruktion am Werkzeugkopf angebracht, zur Erfassung der Drehlagen von erster und zweiter Drehlagenreferenz sowie des Bezugs (der Markierung 3) vorgesehen.

Wie zu erkennen ist, ist die Erfindung nicht auf die in den obigen Ausführungsbeispielen dargestellten Einzelheiten eingeschränkt.

## Patentansprüche

1. Verfahren zum Hartfeinbearbeiten zweier an einem Werkstück (4) vorgesehener, voneinander verschiedener Verzahnungen (1, 2), bei dem man vor der jeweiligen Bearbeitung zur Einstellung eines passenden Werkzeugeingriffs für die Bearbeitung eine erste relative Drehwinkellage einer ersten Drehlagenreferenz (ϕ1) einer ersten (1) der Verzahnungen zu einer Drehachsposition einer das Werkstück für die erste Bearbeitung aufgespannt haltenden Werkstückspindel sowie eine zweite relative Drehwinkellage einer zweiten Drehlagenreferenz (ϕ2) der zweiten der Verzahnungen zu einer Drehachsposition einer das Werkstück für die zweite Bearbeitung aufgespannt haltenden Werkstückspindel bestimmt,
**dadurch gekennzeichnet, dass** die Bearbeitungen ohne zwischenzeitlichen Aufspannungswechsel auf derselben Werkstückspindel (108; 208) und unter zugrundeliegender gekoppelter erster und zweiter Drehlagenreferenz erfolgen.

2. Verfahren nach Anspruch 1, bei dem die Kopplung in einer innerhalb einer Toleranz (±δΔϕ) um einen vorgegebenen Drehwinkel (Δϕ₀) liegenden Drehwinkeldifferenz (Δϕ) zwischen erster und zweiter Drehlagenreferenz besteht.

3. Verfahren nach Anspruch 1 oder 2, bei dem die erste und zweite Drehlagenreferenz einem vorgegebenen Bezug, insbesondere ausgewählten Referenzzahn (21) einer Verzahnung (2) zugeordnet sind, wobei insbesondere die vorgegebene Auswahl des Referenzzahns durch eine insbesondere am Werkstück selbst angeordnete Markierung (3) bestimmt ist.

4. Verfahren nach einem der vorhergehenden Ansprüche, bei dem für das erstbearbeitete Werkstück einer Charge gleichartiger Werkstücke und/oder für das erstbearbeitete Werkstück nach Austausch oder vollzogenem Nachschärfen/Profilieren wenigstens eines der Werkzeuge die Bestimmung der relativen ersten und/oder zweiten Drehwinkellage über sensorisch erfassten Kontakt zwischen Werkstückverzahnung und Werkzeug erfolgt und hieraus die passenden Achsdrehlagen für den Werkzeugeingriff bestimmt werden, wobei insbesondere für die den erstbearbeiteten Werkstücken folgenden Werkstücke eine Einstellung auf die passende Achsdrehlage für den Werkzeugeingriff anhand der für dieses Werkstück insbesondere mittels berührungslosen Sensors bestimmten ersten bzw. zweiten relativen Drehwinkellage erfolgt.

5. Verfahren nach einem der Ansprüche 3 oder 4, bei der für das jeweilige Werkstück auch der vorgegebene Bezug, insbesondere ausgewählte Referenzzahn identifiziert und hierzu insbesondere die Drehlage der Markierung insbesondere berührungslos sensorisch erfasst wird.

6. Verfahren nach einem der vorhergehenden Ansprüche, bei der die Bestimmung der zweiten relativen Drehwinkellage vorgenommen wird, bevor die Bearbeitung der ersten Verzahnung aufgenommen wird, und vice versa.

7. Verfahren nach einem der vorhergehenden Ansprüche, bei dem Abrichtwerkzeuge (401, 402) für die Werkzeuge (101, 102) insbesondere in Form von Verzahnungen, insbesondere Diamantabrichträder, in relativ zueinander feststehender Drehlagenkopplung stehen und insbesondere ebenfalls auf derselben Werkstückspindel (108) angeordnet sind wie die erste und zweite Verzahnung (1, 2).

8. Verzahnungsmaschine (100; 200) zum Hartfeinbearbeiten zweier an einem Werkstück (4) vorgesehener, voneinander verschiedener Verzahnungen (1, 2), mit wenigstens einer Werkstückspindel (108; 208) zum drehenden Antreiben der Werkstücke, einem Werkzeugkopf (104; 204) zur Lagerung eines über den gleichen Antrieb angetriebenen ersten Hartfeinbearbeitungswerkzeugs (101; 201) zum Hartfeinbearbeiten der ersten Verzahnung (1) und eines zweiten Hartfeinbearbeitungswerkzeugs (102; 202) zum Hartfeinbearbeiten der zweiten Verzahnung, wenigstens zwei insbesondere berührungslosen Sensoren (110, 120) sowie einer Steuereinrichtung (99) mit Steueranweisungen zur Ausführung eines Verfahrens nach einem der Ansprüche 1 bis 7.

9. Verzahnungsmaschine nach Anspruch 8, mit einem dritten Sensor (130) zur Erfassung einer am Werkstück angeordneten und einen Bezug für eine der Drehlagenreferenzen, insbesondere vorgegebenen Zahn des Werkstücks identifizierenden Markierung (3) und/oder mit einer Nachschärf- oder Profiliervorrichtung (401, 402) für die Hartfeinbearbeitungswerkzeuge, insbesondere in zueinander fester Drehlage gekoppelt und insbesondere auf der Werkstückspindel (108) angeordnet.

10. Steuerprogramm mit Steueranweisungen, die, wenn auf einer Steuereinrichtung einer Verzahnungsmaschine ausgeführt, diese zur Ausführung eines Verfahrens nach einem der Ansprüche 1 bis 7 steuern.

11. Hartfeinbearbeitungskombiwerkzeug mit zwei verzahnten Hartfeinbearbeitungswerkzeugen geometrisch unbestimmter Schneide in Form innenverzahnter Honringe (101, 102) mit gemeinsamer Drehachse (C1) und gemeinsamer Kopplung über drehlagenfeste gemeinsame Einspannung in einen Werkzeugkopf (104), wobei das erste Hartfeinbearbeitungswerkzeug zur Hartfeinbearbeitung einer ersten Verzahnung eines Werkstücks und das zweite Hartfeinbearbeitungswerkzeug zur Hartfeinbearbeitung einer davon unterschiedlichen zweiten Verzahnung des Werkstücks ausgelegt ist.

12. Verwendung einer Sensoranordnung bei einer Einzentrieroperation bei einer Hartfeinbearbeitung von zwei unterschiedliche Verzahnungen aufweisenden Werkstücken (4), bei der ein erster insbesondere berührungslos arbeitender Sensor (110) der Sensoranordnung zur Zahnlückenerfassung einer ersten der Verzahnungen eingesetzt wird, ein zweiter insbesondere berührungslos arbeitender Sensor (120) der Sensoranordnung zur Zahnlückenerfassung der zweiten Verzahnung eingesetzt wird und ein dritter Sensor (130) der Sensoranordnung zur Erfassung einer dem Bezug für eine Differenz von Drehlagenreferenzen der ersten und zweiten Verzahnung dienenden Markierung (3) am Werkstück (4) eingesetzt wird.

13. Verwendung nach Anspruch 12, bei der zwei, insbesondere drei der Sensoren in einer definierten festen Lagebeziehung zueinander angeordnet sind, insbesondere über ihre Anbringung an einem gemeinsamen Träger, der insbesondere über einen Bewegungsmechanismus in eine Arbeitsstellung des Sensors verbringbar ist.

14. Verwendung nach Anspruch 12, bei der zwei oder drei der Sensoren relativ zueinander über wenigstens eine Positionierbewegungsachse lageverstellbar sind, insbesondere einer oder mehrere Sensoren über beispielsweise je eine Schlittenanordnung oder einen Schwenkarm beweglich angeordnet sind.

## Claims

1. A method for hard finishing two different toothings (1, 2) provided on a workpiece (4), wherein, prior to each machining process, to set the correct tool engagement for the machining process, a first relative rotational angle position of a first rotational position reference (ϕ1) a first (1) of the toothings is determined relative to a rotation axis position of a workpiece spindle holding the workpiece clamped for the first machining, and a second relative rotational angle position of a second rotational position reference (ϕ2) of the second of the toothings is determined relative to a rotation axis position of a workpiece spindle holding the workpiece clamped for the second machining,
**characterised in that** the machining processes are carried out on the same workpiece spindle (108; 208) with no intervening clamping change and taking into account the underlying coupling of the first and second rotational position references.

2. The method according to claim 1, wherein the coupling consists in a rotational angle difference (Δϕ) between the first and second rotational position references which is within a tolerance (±δΔϕ) around a predefined rotational angle (Δϕ₀).

3. The method according to claim 1 or 2, wherein the first and second rotational position references are assigned to a predefined reference, in particular to a selected reference tooth (21) of a toothing (2), wherein in particular the predefined selection of the reference tooth is determined by a marking (3) placed in particular on the workpiece itself.

4. The method according to one of the preceding claims, wherein for the first machined workpiece of a batch of identical workpieces, and/or for the first machined workpiece after a replacement or resharpening/profiling of at least one of the tools, the relative first and/or second relative rotational angle position is/are determined by means of contact, detected by a sensor, between the workpiece toothing and the tool, and the appropriate axis rotational positions for the tool engagement are determined therefrom, wherein the workpieces following the first machined workpieces in particular are set to the correct axis rotational position for the tool engagement based on the first or second relative rotational angle position determined for this workpiece by means in particular of a contactless sensor.

5. The method according to one of claims 3 or 4, wherein the predefined reference, in particular the selected reference tooth, is also identified for the respective workpiece and, to this end, in particular the rotational position of the marking is detected by a sensor, in particular by a contactless sensor.

6. The method according to one of the preceding claims, wherein the second relative rotational angle position is determined before the machining of the first toothing is started, and vice versa.

7. The method according to one of the preceding claims, wherein dressing tools (401, 402) for the tools (101, 102) in the form in particular of toothings, in particular diamond dressing wheels, are arranged with a coupling of the rotational positions fixed relative to each other, and in particular are also arranged on the same workpiece spindle (108) as the first and second toothings (1, 2).

8. A tooth cutting machine (100; 200) for hard finishing two different toothings (1, 2) provided on a workpiece (4) comprising: at least one workpiece spindle (108; 208) for rotating the workpieces by means of a drive; a tool head (104; 204) for mounting a first hard finishing tool (101; 201) driven by the same drive for hard finishing the first toothing (1) and a second hard finishing tool (102; 202) for hard finishing the second toothing; at least two, in particular contactless, sensors (110, 120); and a control device (99) including control instructions for executing a method according to one of claims 1 to 7.

9. The tooth cutting machine according to claim 8, comprising a third sensor (130) for detecting a marking (3), which is arranged on the workpiece and identifies a reference for one of the rotational position references, in particular a predefined tooth of the workpiece, and/or comprising a resharpening or profiling device (401, 402) for the hard finishing tools, in particular coupled in a fixed rotational position relative to each other and in particular arranged on the workpiece spindle (108).

10. A control program having control instructions which, when executed in a control device of a tooth cutting machine, control said machine to execute a method according to one of claims 1 to 7.

11. A hard finishing combination tool comprising two toothed hard finishing tools with geometrically undefined cutting edges in the form of internally toothed honing rings (101, 102) with a shared axis of rotation (C1) and a shared coupling via the same rotationally-fixed clamping in a tool head (104), wherein the first hard finishing tool is configured for hard finishing a first toothing of a workpiece, and the second hard finishing tool is configured for hard finishing a second toothing, different to the first toothing, of the workpiece.

12. Use of a sensor arrangement for a centring operation during the hard finishing of workpieces (4) having two different toothings, wherein a first, and in particular contactless, sensor (110) of the sensor arrangement is used for detecting a tooth gap of a first of the toothings, a second, and in particular contactless, sensor (120) of the sensor arrangement is used for detecting a tooth gap of the second of the toothings, and a third sensor (130) of the sensor arrangement is used to detect a marking (3) on the workpiece (4) which serves as a reference for a difference between the rotational position references of the first and second toothings.

13. The use according to claim 12, wherein two, in particular three, of the sensors are arranged in a defined fixed positional relationship to each other, in particular via their attachment to a shared carrier, which can be brought into a working position of the sensor by means, in particular, of a movement mechanism.

14. The use according to claim 12, wherein two or three of the sensors can be moved in position relative to each other using at least one positioning movement axis, in particular one or more sensors are moveably arranged by means, for example, of a respective slide arrangement or swivel arm.

## Revendications

1. Procédé d'usinage de précision sur métaux durs de deux dentures (1, 2) différentes prévues sur une pièce (4), dans lequel, avant l'usinage respectif et pour régler une interaction de l'outil adaptée à l'usinage, on détermine une première position angulaire de rotation relative d'une première référence de position de rotation (ϕ1) d'une première (1) des dentures par rapport à une position d'axe de rotation d'une broche porte-pièce maintenant la pièce à usiner abloquée en vue du premier usinage, ainsi qu'une deuxième position angulaire de rotation relative d'une deuxième référence de position de rotation (ϕ2) de la deuxième des dentures par rapport à une position d'axe de rotation d'une broche porte-pièce maintenant la pièce à usiner abloquée en vue du deuxième usinage,
**caractérisé en ce que** les usinages ont lieu sur la même broche porte-pièce (108 ; 208) sans changement d'ablocage intermédiaire et en tenant compte du couplage fondamental de la première et de la deuxième référence de position de rotation.

2. Procédé selon la revendication 1, dans lequel le couplage consiste en une différence d'angle de rotation (Δϕ) entre la première et la deuxième référence de position de rotation située dans des tolérances (±δΔϕ) autour d'un angle de rotation prédéfini (Δϕ₀).

3. Procédé selon la revendication 1 ou 2, dans lequel la première et la deuxième référence de position de rotation sont associées à une référence prédéfinie, notamment à une dent de référence (21) choisie d'une denture (2), le choix prédéterminé de la dent de référence s'effectuant notamment du fait d'un repère (3) disposé notamment directement sur la pièce à usiner.

4. Procédé selon l'une des revendications précédentes, dans lequel, pour la première pièce usinée d'un lot de pièces similaires et/ou pour la première pièce usinée après remplacement ou réaffûtage/profilage d'au moins un des outils, la détermination de la première et/ou deuxième position d'angle de rotation relative s'effectue par un contact, détecté par capteur, entre la denture de la pièce et l'outil, à partir de quoi les positions de rotation d'axe adaptées à l'interaction de l'outil sont déterminées, étant entendu que, notamment pour les pièces suivant les premières pièces usinées, il s'effectue un réglage à la position de rotation d'axe adaptée à l'interaction de l'outil, en tenant compte de la première ou de la deuxième position angulaire de rotation relative déterminée, notamment au moyen d'un capteur sans contact, pour cette pièce.

5. Procédé selon l'une des revendications 3 ou 4, dans lequel la référence prédéfinie, notamment la dent de référence choisie, est également identifiée pour la pièce à usiner respective et, à cet effet notamment la position de rotation du repère est détectée par capteur, notamment sans contact.

6. Procédé selon l'une des revendications précédentes, dans lequel la détermination de la deuxième position angulaire de rotation relative est réalisée avant le début de l'usinage de la première denture, et vice versa.

7. Procédé selon l'une quelconque des revendications précédentes, dans lequel des outils de dressage (401, 402) pour les outils (101, 102), notamment sous forme de dentures, notamment des meules de dressage diamantées, se trouvent selon un couplage de positions de rotation relatif fixe et sont notamment également disposés sur la même broche porte-pièce (108) que la première et la deuxième denture (1, 2).

8. Machine à tailler les engrenages (100 ; 200) pour l'usinage de précision sur métaux durs de deux dentures (1, 2) différentes prévues sur une pièce (4), comportant au moins une broche porte-pièce (108 ; 208) destinée à entraîner les pièces en rotation, une tête porte-outil (104 ; 204) destinée à supporter un premier outil d'usinage de précision sur métaux durs (101 ; 201) entraîné par le même entraînement pour l'usinage de précision de la première denture (1) et un deuxième outil d'usinage de précision sur métaux durs (102 ; 202) pour l'usinage de précision de la deuxième denture, au moins deux capteurs (110, 120) notamment sans contact ainsi qu'un dispositif de commande (99) doté d'instructions de commande pour l'exécution d'un procédé selon l'une des revendications 1 à 7.

9. Machine à tailler les engrenages selon la revendication 8, comportant un troisième capteur (130) pour détecter un repère (3) disposé sur la pièce et identifiant une référence pour l'une des références de position de rotation, notamment une dent prédéfinie de la pièce, et/ou comportant un dispositif de réaffûtage ou de profilage (401, 402) pour les outils d'usinage de précision, notamment couplés dans une position de rotation mutuellement fixe et notamment disposés sur la broche porte-pièce (108).

10. Programme de commande doté d'instructions de commande qui, lorsqu'elles sont exécutées sur un dispositif de commande d'une machine à tailler les engrenages, commandent celle-ci de façon qu'elle exécute un procédé selon l'une des revendications 1 à 7.

11. Outil combiné d'usinage de précision sur métaux durs comportant deux outils d'usinage de précision dentés à bord de coupe géométriquement indéterminé sous la forme de meules de honing à denture intérieure (101, 102) dotées d'un axe de rotation (C1) commun et d'un couplage commun par ablocage commun dans une position de rotation fixe dans une tête porte-outil (104), le premier outil d'usinage de précision étant conçu pour un usinage de précision d'une première denture d'une pièce à usiner et le deuxième outil d'usinage de précision étant conçu pour un usinage de précision d'une deuxième denture de la pièce à usiner, différente de la première.

12. Utilisation d'un système de capteurs lors d'une opération de centrage dans le cadre d'un usinage de précision sur métaux durs de pièces (4) présentant deux dentures différentes, dans laquelle un premier capteur (110), fonctionnant notamment sans contact, du système de capteurs est utilisé pour détecter l'entredent d'une première des dentures, un deuxième capteur (120), fonctionnant notamment sans contact, du système de capteurs est utilisé pour détecter l'entredent de la deuxième denture et un troisième capteur (130) du système de capteurs est utilisé pour détecter, sur la pièce (4), un repère (3) servant de référence pour une différence entre les références de position de rotation de la première et de la deuxième denture.

13. Utilisation selon la revendication 12, dans laquelle deux, et notamment trois, des capteurs sont disposés dans une relation de position fixe définie les uns par rapport aux autres, notamment du fait de leur installation sur un support commun, qui permet au capteur de venir en position de travail notamment grâce à un mécanisme de déplacement.

14. Utilisation selon la revendication 12, dans laquelle deux ou trois des capteurs sont réglables en position les uns par rapport aux autres sur au moins un axe de déplacement de positionnement, et notamment un ou plusieurs capteurs sont disposés de manière mobile, par exemple par le biais d'un dispositif coulissant ou d'un bras pivotant respectif.
